# EUROPEAN PATENT APPLICATION

(11) **EP 4 760 449 A1**
(43) Date of publication of application: **17.06.2026**
(21) Application number: 24909682.7
(22) Date of filing: 18.07.2024
(51) Int. Cl.: G06F 1/16

(54) **LAPTOP COMPUTER**

(30) Priority: 29.12.2023 CN 202311867372
(71) Applicant: Honor Device Co., Ltd., Shenzhen, Guangdong 518040 (CN)
(72) Inventor: REN, Xiaolong, Shenzhen, Guangdong 518040 (CN); HU, Yiwu, Shenzhen, Guangdong 518040 (CN); YUE, Yongbao, Shenzhen, Guangdong 518040 (CN)
(74) Representative: Henselmann, Alexander Gerhard
(86) International application number: PCT/CN2024/106205
(87) International publication number: WO 2025/138728

(57) **Abstract**

Embodiments of this application provide a notebook computer. An antenna assembly includes an antenna bracket, an excitation source, a grounding region, a feed point, and a flexible conductive member. A first air vent is disposed on a side edge of a first metal housing. A vent channel is formed on the antenna bracket, and the vent channel is disposed opposite to and close to the first air vent. The antenna bracket has a first surface facing the side of a display and a second surface away from the side of the display. The excitation source and the feed point are disposed on the second surface of the antenna bracket, and a grounding region is disposed on at least the second surface of the antenna bracket. The flexible conductive member connects the grounding region to the first metal housing, and the flexible conductive member is located on a side that is of the excitation source and that is away from the first air vent. A radiation port or a non-metal member is disposed on a region that is of the first metal housing and that directly faces the excitation source. The notebook computer provided in the embodiments of this application can greatly reduce an impact of an antenna on an all-metal texture of the notebook computer, and facilitate a narrow-bezel design of the notebook computer.

## Description

### TECHNICAL FIELD

Embodiments of this application relate to the field of terminal device technologies, and in particular, to a notebook computer. This application claims priority to Chinese Patent Application No. 202311867372.X, filed with the China National Intellectual Property Administration on December 29, 2023, and entitled "NOTEBOOK COMPUTER", which is incorporated herein by reference in its entirety.

### BACKGROUND

With the development of science and technology, consumers have increasingly high requirements on an appearance of an electronic device (for example, a notebook computer). A notebook computer (Laptop), which is referred to as a notebook and is alternatively referred to as a portable computer, a laptop computer, a palmtop computer, or a laptop computer, features a compact size and is more portable compared with a desktop computer. The notebook computer is a compact and portable personal computer. The notebook computer, as an electronic device for daily office work, is subject to a growing consumer demand for a narrow bezel and all-metal texture and touch feeling.

Because a radio frequency antenna usually needs to be disposed in the notebook computer, a structural design of a narrow-bezel and all-metal notebook computer poses a great challenge to the radio frequency antenna field. For an all-metal notebook computer, there are two types of general antenna designs. The first type is to open a window on a metal housing on a screen side or a system side, so that an antenna can perform radiation, and the second type is to design an antenna in a plastic rotating shaft cover.

However, for a narrow-bezel notebook computer, in the foregoing first solution, metal integrity of the notebook computer is damaged, and all-metal texture of the notebook computer is affected. In the foregoing second solution, although the all-metal design of the notebook computer can be met, in this solution, there is a section of plastic space in a lower part of a screen, which prevents implementation of a narrower bezel. In addition, in this solution, the notebook computer usually needs to have a rotating shaft cover with a relatively large size radius, which affects an appearance of a product and is unfavorable for the all-metal design of the product.

### SUMMARY

Embodiments of this application provide a notebook computer, which can greatly reduce an impact of an antenna on all-metal texture of the notebook computer, and facilitate a narrow-bezel design of the notebook computer.

The embodiments of this application provide a notebook computer, including a display and a host, where a side of the display is hinged to a side of the host, and the host includes a first metal housing, a heat sink, and an antenna assembly; the heat sink and the antenna assembly are disposed in the first metal housing; the antenna assembly includes an antenna bracket, an excitation source, a grounding region, a feed point, and a flexible conductive member, where a first air vent is disposed on a side edge of the first metal housing, at least one vent channel is formed on the antenna bracket, and the vent channel is disposed opposite to and close to the first air vent; the antenna bracket has a first surface facing the side of the display and a second surface away from the side of the display, the excitation source and the feed point are disposed on the second surface of the antenna bracket, the feed point is connected to the excitation source, a grounding region is disposed on at least the second surface of the antenna bracket, the excitation source is connected to the grounding region, the flexible conductive member connects the grounding region to the first metal housing, and the flexible conductive member is located on a side that is of the excitation source and that is away from the first air vent; and a radiation port or a non-metal member is disposed in a region that is of the first metal housing and that directly faces the excitation source.

In the notebook computer provided in the embodiments of this application, the antenna assembly is disposed at the first air vent of a host body, so that the antenna assembly does not occupy a position of a display end, to implement a narrow-bezel, full-screen, and all-metal design of the display end. In addition, the antenna assembly does not occupy other space in the host body, thereby making a design of the notebook computer more aesthetic. In addition, the excitation source is located on a surface that is of the antenna bracket and that faces a D housing (which may be understood as that the excitation source is located on a surface that is of the antenna bracket and that faces a desktop when the notebook computer is placed on the desktop), which facilitates an all-metal design of a C housing, thereby improving appearance aesthetics of the notebook computer. In addition, in actual application, the C housing is usually a cover body with a folded edge and is buckled on the D housing, and an all-metal setting of the C housing can improve overall strength of the C housing. Further, the flexible conductive member is located on a side that is of the excitation source and that is away from the first air vent, and the flexible conductive member may shield signal interference generated from the interior of the notebook computer to the excitation source, to block electromagnetic noise. Compared with a manner in which the excitation source is disposed on a surface that is of the antenna bracket and that faces or is away from the first air vent, a metal partition wall may not be required to shield the signal interference to the excitation source, which helps make the notebook computer lighter and thinner. In addition, a radiation surface of the excitation source faces the D housing, and a radiation port or a non-metal member is disposed in a region that is of the D housing and that corresponds to the excitation source. In this case, a plastic outer frame may not need to be disposed as an appearance surface of the C housing or the D housing, thereby facilitating an all-metal design of the C housing and the D housing.

In a possible implementation, the first metal housing includes the C housing close to the side of the display and the D housing away from the side of the display. A junction between the D housing and the side edge of the first metal housing is an inclined surface, and the non-metal member is disposed on the inclined surface. The second surface of the antenna bracket is disposed in a shape similar to the inclined surface.

This can facilitate signal radiation of the excitation source, thereby preventing a signal from being shielded by a desktop.

In a possible implementation, a second air vent is disposed on the non-metal member, a third air vent and a fourth air vent are respectively disposed on the excitation source and the antenna bracket, and at least a part of the fourth air vent and the third air vent communicate with the vent channel.

In this case, the antenna assembly can assist the first air vent in air intake or exhaust, and in addition, can improve appearance aesthetics of the notebook computer.

In a possible implementation, a grounding region is disposed on the first surface of the antenna bracket, and the grounding region on the first surface of the antenna bracket is connected to the grounding region on the second surface of the antenna bracket. A flexible conductive member is disposed on the grounding region of the first surface of the antenna bracket to be connected to the first metal housing.

In this case, a grounding area of an antenna can be increased, thereby improving overall performance of the antenna.

In a possible implementation, an electrical connection part is disposed on two end surfaces that are of the antenna bracket and that are perpendicular to the vent channel and on a column on a side that is of each vent channel and that is away from the first air vent, and the electrical connection part connects the grounding region on the first surface of the antenna bracket to the grounding region on the second surface of the antenna bracket to form a resonant cavity antenna.

Compared with a conventional antenna, the resonant cavity antenna does not need a complex feed network and has a simple structure easy for processing, which helps improve antenna directivity, sharpen a beam width, and reduce a size of the radiation port disposed on the first metal housing.

In a possible implementation, an excitation conductor is disposed on a sidewall of the vent channel. One end of the excitation conductor is connected to the excitation source, and the other end of the excitation conductor extends toward the first surface of the antenna bracket.

In this way, a metal coupling amount on a sidewall of the C housing and on a surface that is of the C housing and that is disposed with a keyboard can be increased, which can effectively improve or compensate for antenna efficiency and a bandwidth.

In a possible implementation, there are at least two antenna assemblies, and two antenna assemblies are disposed along two adjacent side edges of the notebook computer.

In this case, antenna directivity can be improved, and overall efficiency, a directional coefficient, isolation, and an OTA indicator are improved to some extent compared with those of a conventional antenna.

In a possible implementation, an antenna formed by the excitation source, the grounding region, and the feed point is an FPC antenna or an LDS antenna.

In a possible implementation, the excitation source and the first metal housing are spaced apart, which can increase a clearance region of the antenna.

In a possible implementation, the first air vent is disposed on a side that is of the first metal housing and that is hinged to the display and/or is disposed on a side adjacent to the side that is of the first metal housing and that is hinged to the display, which helps improve user experience.

### BRIEF DESCRIPTION OF DRAWINGS

To describe the technical solutions in this application or the conventional technology more clearly, the following briefly describes the accompanying drawings required for describing embodiments or the conventional technology. Apparently, the accompanying drawings in the following description show merely some embodiments of this application, and a person of ordinary skill in the art may still derive other drawings from these accompanying drawings without creative efforts.
FIG. 1 is a schematic diagram of a structure of a notebook computer according to an embodiment of this application;
FIG. 2 is a schematic diagram of a structure of a notebook computer according to an embodiment of this application;
FIG. 3 is a schematic diagram of a partially split structure of a notebook computer according to an embodiment of this application;
FIG. 4 is a schematic diagram of a structure of an antenna assembly according to an embodiment of this application;
FIG. 5 is a top view of a partial structure of an antenna assembly according to an embodiment of this application;
FIG. 6 is a schematic diagram of a cross-section structure of a notebook computer according to an embodiment of this application;
FIG. 7 is a schematic diagram of a structure of an antenna assembly of a notebook computer according to an embodiment of this application;
FIG. 8 is an appearance diagram of a notebook computer according to an embodiment of this application;
FIG. 9 is a bottom view corresponding to the antenna assembly shown in FIG. 5;
FIG. 10 is a back view corresponding to the antenna assembly shown in FIG. 5;
FIG. 11 is a side view corresponding to the antenna assembly shown in FIG. 5;
FIG. 12 is a direction effect diagram of two antenna assemblies in a 2.4G frequency band according to an embodiment of this application; and
FIG. 13 is a direction effect diagram of two antenna assemblies in a 5.5G frequency band according to an embodiment of this application.

### Descriptions of reference numerals:

100 - notebook computer;
200 - display; 210 - display screen; 220 - second metal housing;
300 - host; 310 - host body;
311 - first metal housing; 3111 - C housing; 3112 - D housing; 31121 - inclined surface;
312 - battery; 313 - mainboard; 314- heat sink; 3141 - heat dissipation fin;
315 - first air vent
320 - keyboard; 330 - touchpad; 340 - antenna cable; 350 - non-metal member; 351 - second air vent
400 - antenna assembly;
410 - antenna bracket; 411 - vent channel; 412 - first surface; 413 - second surface; 414 - fourth air vent
415 - cut-off part;
420 - excitation source 421 - third vent hole;
430 - grounding region 440 - feed point; 450 - flexible conductive member; 460 - electrical connection part; 470 - excitation conductor.

### DESCRIPTION OF EMBODIMENTS

Terms used in the implementation part of this application are merely intended to explain specific embodiments of this application, and are not intended to limit this application. Implementations of the embodiments of this application are described in detail below with reference to the accompanying drawings.

In the embodiments of this application, the term "include", "comprise", or any other variant thereof is intended to cover non-exclusive inclusion, so that a process, method, article, or apparatus that includes a series of elements not only includes those elements, but also includes other elements that are not explicitly listed, or includes elements inherent to such a process, method, article, or apparatus. Without further limitation, an element defined by the sentence "including a" does not exclude existence of other identical elements in the process, method, article, or apparatus including the element.

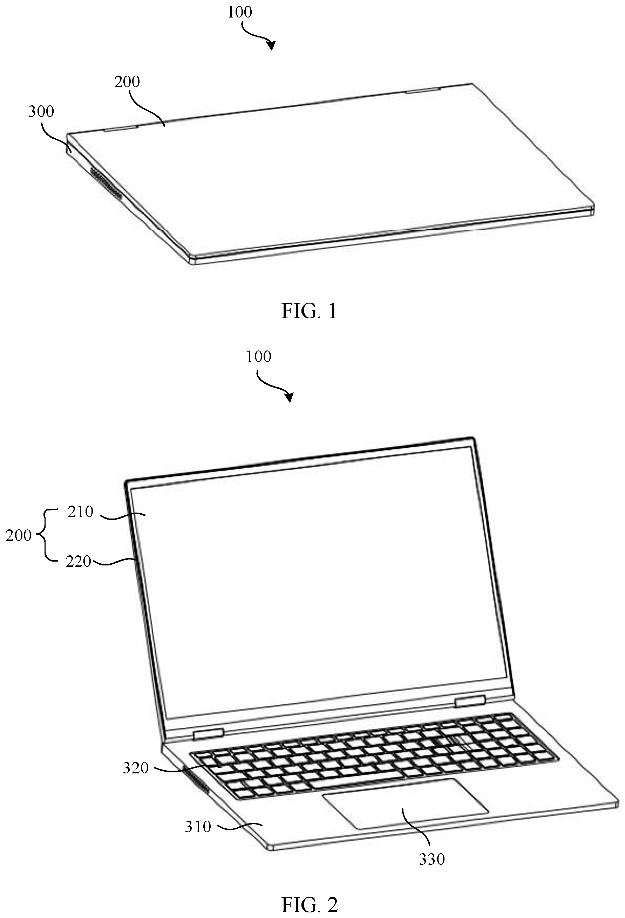

FIG. 1 is a schematic diagram of a structure of a notebook computer 100 according to an embodiment of this application. FIG. 2 is a schematic diagram of a structure of a notebook computer 100 according to an embodiment of this application. Referring to FIG. 1 and FIG. 2, FIG. 1 is a schematic diagram of the notebook computer 100 in a folded state. FIG. 2 is a schematic diagram of the notebook computer 100 in an unfolded state. The notebook computer 100 provided in this embodiment of this application includes a display 200 and a host 300.

Specifically, the display 200 may include a display screen 210 and a second metal housing 220. The display screen 210 is configured to display an image, a video, and the like. The display screen 210 may be a flexible display screen, or may be a rigid display screen. For example, the display screen 210 may be an organic light-emitting diode (organic light-emitting diode, OLED) display screen, an active-matrix organic light-emitting diode or an active-matrix organic light-emitting diode (active-matrix organic light-emitting diode, AMOLED) display screen, a mini light-emitting diode (mini organic light-emitting diode) display screen, a micro light-emitting diode (micro organic light-emitting diode) display screen, a micro organic light-emitting diode (micro organic light-emitting diode) display screen, a quantum dot light emitting diode (quantum dot light emitting diodes, QLED) display screen, or a liquid crystal display (liquid crystal display, LCD) screen.

The second metal housing 220 is configured to protect the display screen 210. The second metal housing 220 may be wrapped around an edge periphery of the display screen 210 and on a back of the display screen 210. In some embodiments of this application, the second metal housing 220 may further be divided into an A housing and a B housing.

The host 300 may include a host body 310, a keyboard 320, and a touchpad 330. The keyboard 320 and the touchpad 330 are disposed on the host body 310. The keyboard 320 is configured to input instructions or data. A working mode of the touchpad 330 is being used as a mouse. A touch action (including actions such as sliding and tapping) performed by a user finger is used to control an action of a cursor on the display 200, to perform an operation of the mouse such as "cursor navigation", "select", or "confirm". The working mode of the touchpad 330 is referred to as a mouse working mode in this embodiment of this application. It should be noted that, in the mouse working mode, the touchpad 330 may replace the mouse to control the notebook computer 100, or may work cooperatively with the mouse to improve portable performance of the notebook computer 100.

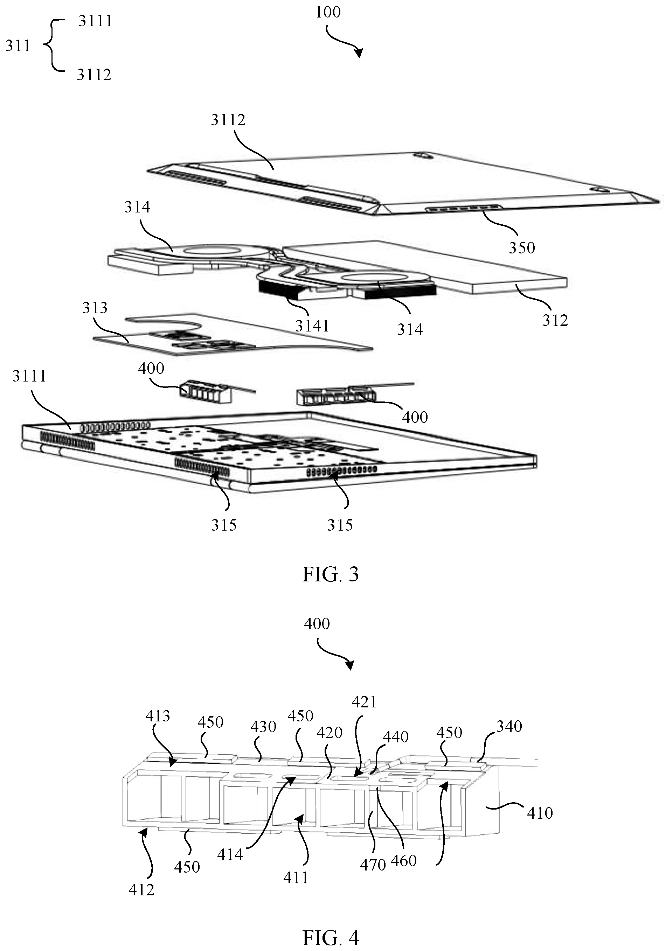

FIG. 3 is a schematic diagram of a partially split structure of a notebook computer 100 according to an embodiment of this application. Referring to FIG. 3, the host body 310 may include a first metal housing 311 and an electronic component accommodated in the first metal housing 311. The electronic component includes but is not limited to a mainboard 313, a battery 312, a heat sink, a processor, a memory, and the like. The host body 310 is configured to control, based on the instructions or the data input by the keyboard 320, the display 200 to display an image and a video, and is further configured to control a cursor action on the display 200 based on the touch action input by the touchpad 330.

In some embodiments of this application, the first metal housing 311 may include a C housing 3111 and a D housing 3112 (as shown in FIG. 3). It should be further noted that, in the notebook computer 100, a housing is usually divided into an A housing, a B housing, a C housing 3111, and a D housing 3112. The A housing is a rear cover of the display screen 210 (that is, a top cover body in FIG. 1), the B housing is a display front frame (that is, a housing around an edge periphery of the display screen 210), the C housing 3111 is an upper cover of the host 300 (that is, a housing around an edge periphery of the keyboard 320 and the touchpad 330), and the D housing 3112 is a lower cover of the host 300 (that is, a bottom housing of the notebook computer 100 placed on a desktop.). It may be understood that the second metal housing 220 may be divided into the A housing and the B housing, and certainly, the second metal housing 220 may be formed integrally. The foregoing description is also applicable to the first metal housing 311. The first metal housing 311 may be divided into the C housing 3111 and the D housing 3112, and certainly, the first metal housing 311 may be integrally formed. "Integrally formed" herein means that two components are processed into an indivisible whole.

A side of the host body 310 is hinged to a side of the display 200. This application imposes no limitation on a form in which the host body 310 is hinged to the display 200. For example, as shown in FIG. 2 and FIG. 3, the notebook computer 100 uses a vertical shaft to hinge the C housing 3111 to the second metal housing 220 of the display 200, so that the notebook computer 100 can be switched between the unfolded state and the folded state. When the notebook computer 100 is in the unfolded state, an included angle between the display 200 and the host 300 is greater than 0° and less than 180° (for example, as shown in FIG. 2). When the notebook computer 100 is in the folded state, the display 200 covers the host 300, and a display surface of the display screen 210 is opposite to the keyboard 320 of the host 300 (as shown in FIG. 1).

Still referring to FIG. 3, in the notebook computer 100 provided in this embodiment of this application, the electronic components in the host body 310 may include the battery 312 and the mainboard 313, where the battery 312 may provide electrical energy for the mainboard 313 and the display screen 210, and the mainboard 313 is connected to another electronic component and the display screen 210 to control the another electronic component and the display screen 210.

Generally, an antenna unit, such as a Wi-Fi antenna, needs to be disposed in the notebook computer 100. In a related technology, for the notebook computer 100 with an all-metal design, the antenna unit is usually designed in a plastic rotating shaft cover at a hinge between the host body 310 and the display 200, to reduce an impact on a metal appearance of the second metal housing 220 of the display 200 and on the first metal housing 311 of the host body 310. However, compared with the notebook computer 100 with the vertical shaft, in the solution with the plastic rotating shaft cover, a section of plastic space is left under the display screen 210, which prevents the notebook computer 100 from having a narrower bezel, and the plastic rotating shaft cover further affects the all-metal appearance of the notebook computer 100. When the antenna unit is designed in the second metal housing 220 of the display 200 or is designed in the first metal housing 311 of the host body 310, there is a need to open a window on the second metal housing 220 and the C housing to enable the antenna unit to perform radiation. In this case, metal integrity of the notebook computer 100 is damaged, and all-metal texture of the notebook computer 100 is affected.

To resolve the foregoing problem, the embodiments of this application provide the notebook computer 100. An antenna assembly 400 is disposed at an air vent of the notebook computer 100, and radiation is performed by using some gaps on a surface of the D housing 3112, which greatly reduces an impact of an antenna on a metal housing, and facilitates an all-metal and narrow-bezel design.

The following describes in detail the notebook computer 100 provided in the embodiments of this application with reference to the accompanying drawings and specific embodiments.

Referring to FIG. 2 and FIG. 3, the host body 310 further includes a heat sink 314 and the antenna assembly 400 that are disposed in the first metal housing 311. A function of the heat sink 314 is to perform heat dissipation on the electronic component in the host body 310. A heat dissipation fin 3141 may further be disposed at an air outlet of the heat sink 314, to improve heat dissipation performance of the heat sink 314. The heat sink 314 may use a normally used fan or the like. A quantity of heat sinks 314 and a setting location thereof in the host body 310 are not limited in this application. For example, as shown in FIG. 3, in some embodiments of this application, one heat sink 314 is disposed on each of two sides that are of the mainboard 313 and that are close to a hinged side of the display 200.

FIG. 4 is a schematic diagram of a structure of an antenna assembly 400 according to an embodiment of this application. Referring to FIG. 4 and with reference to FIG. 3, the antenna assembly 400 includes an antenna bracket 410, an excitation source 420, a grounding region 430, a feed point 440, and a flexible conductive member 450. The antenna bracket 410 may use a plastic bracket or a bracket formed by using a nano-molding technology (NMT). An antenna form formed by using the excitation source 420 and the feed point 440 may use a flexible printed circuit (Flexible Printed Circuit, FPC) antenna or a laser-direct-structuring (Laser-Direct-Structuring, LDS) antenna.

Specifically, a first air vent 315 is disposed on a sidewall of the first metal housing 311. The air vent may be an air inlet or an air outlet of the notebook computer 100. At least one vent channel 411 is formed on the bracket antenna. For example, seven vent channels 411 are formed and arranged side by side on the bracket antenna in FIG. 4, and the vent channel 411 is disposed opposite to and close to the first air vent 315. Herein, "the vent channel 411 is disposed opposite to and close to the first air vent 315" means that the vent channel 411 is disposed as close to the first air vent 315 as possible, so that an airflow entering through the first air vent 315 from the outside can flow into an interior of the notebook computer 100 through the vent channel 411 or hot air blown from the heat sink 314 can flow out from the first air vent 315 through the vent channel 411.

In some embodiments of this application, that the first air vent 315 may be disposed on a side that is of the first metal housing 311 and that is hinged to the display 200 and/or on a side adjacent to the side that is of the first metal housing 311 and that is hinged to the display 200 may be understood that the first air vent 315 is disposed away from a user operation side, thereby helping improve user experience.

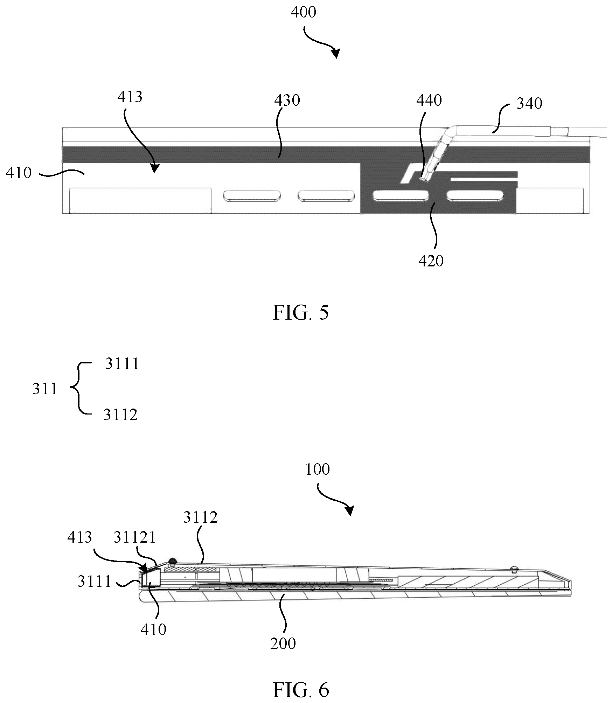

The antenna bracket 410 has a first surface 412 (that is, a surface facing the C housing 3111 of the notebook computer 100) facing the side of the display 200 and a second surface 413 (that is, a surface facing the D housing 3112 of the notebook computer 100) away from the side of the display 200. FIG. 5 is a top view of a partial structure of an antenna assembly 400 according to an embodiment of this application. The top view of the antenna assembly 400 in FIG. 5 is a top view observed at an incident angle from a surface of the D housing 3112. Referring to FIG. 5 and with reference to FIG. 4, the excitation source 420 and the feed point 440 are disposed on the second surface 413 of the antenna bracket 410, the feed point 440 is connected to the excitation source 420, the feed point 440 is fed a high-frequency signal by using an antenna cable 340, and another end of the antenna cable 340 may be connected to the mainboard 313 of the notebook computer 100. The excitation source 420 and the first metal housing 311 may be spaced apart to increase a clearance region of an antenna.

A grounding region 430 is disposed on at least the second surface 413 of the antenna bracket 410, and the excitation source 420 is connected to the grounding region 430. The flexible conductive member 450 connects the grounding region 430 to the first metal housing 311. For example, the flexible conductive member 450 may be a conductive foam or the like. The flexible conductive member 450 connects the grounding region 430 on the second surface 413 of the antenna bracket 410 to the D housing 3112 of the notebook computer 100. In addition, the flexible conductive member 450 is located on a side that is of the excitation source 420 and that is away from the first air vent 315. It may be understood that the flexible conductive member 450 is closer to an interior of a notebook body than the excitation source 420.

In addition, referring to FIG. 3, a radiation port or a non-metal member 350 is disposed on a region that is of the first metal housing 311 and that directly faces the excitation source 420 to prevent a signal of the excitation source 420 from being interfered. For example, as shown in FIG. 3, the non-metal member 350 (for, example, a plastic part) is disposed in the region that is of the first metal housing 311 and that directly faces the excitation source 420, so that interference to the signal of the excitation source 420 can be avoided and appearance aesthetics of the notebook computer 100 can be improved. In addition, the non-metal member 350 may be sprayed in a color that is the same as or similar to that of the D housing 3112, to further improve the appearance aesthetics of the notebook computer 100.

It may be understood that, in the notebook computer 100 provided in this embodiment of this application, the antenna assembly 400 is disposed at the first air vent 315 of the host body 310, so that the antenna assembly 400 does not occupy a position of a display 200 end, to implement a narrow-bezel, full-screen, and all-metal design of the display 200 end. In addition, the antenna assembly 400 does not occupy other space in the host body 310, thereby making a design of the notebook computer 100 more aesthetic. In addition, the excitation source 420 is located on a surface that is of the antenna bracket 410 and that faces the D housing 3112 (which may be understood as that the excitation source 420 is located on a surface that is of the antenna bracket 410 and that faces a desktop when the notebook computer 100 is placed on the desktop), which facilitates an all-metal design of the C housing 3111, thereby improving appearance aesthetics of the notebook computer 100. In addition, in actual application, the C housing 3111 is usually a cover body with a folded edge and is buckled on the D housing 3112, and an all-metal setting of the C housing 3111 may improve overall strength of the C housing 3111. Further, the flexible conductive member 450 is located on a side that is of the excitation source 420 and that is away from the first air vent 315, and the flexible conductive member 450 may shield signal interference generated from the interior of the notebook computer 100 to the excitation source 420, to block electromagnetic noise. Compared with a manner in which the excitation source 420 is disposed on a surface that is of the antenna bracket 410 and that faces or is away from the first air vent 315, a metal partition wall may not be disposed to shield signal interference to the excitation source 420, which helps make the notebook computer 100 lighter and thinner. In addition, a radiation surface of the excitation source 420 faces the D housing 3112, and a radiation port or the non-metal member 350 is disposed in a region that is of the D housing 3112 and that corresponds to the excitation source 420. In this case, a plastic outer frame may not need to be disposed as an appearance surface of the C housing 3111 or the D housing 3112, thereby facilitating the all-metal design of the C housing 3111 and the D housing 3112.

It should be noted that the all-metal design of the notebook computer 100 mentioned in this application does not mean that the housing of the notebook computer 100 is entirely made of metal, but means that use of a material other than the metal is minimized. Most importantly, appearances of the A housing and the C housing are designed in an all-metal manner, to meet a design of an all-metal housing.

Certainly, this application is more than this. FIG. 6 is a schematic diagram of a cross-section structure of a notebook computer 100 according to an embodiment of this application. Referring to FIG. 6, FIG. 6 may be considered as a schematic diagram in which the notebook computer 100 is inverted. In some embodiments of this application, the first metal housing 311 may include the C housing 3111 close to the side of the display 200 and the D housing 3112 away from the side of the display 200. A junction between the D housing 3112 and a side edge of the first metal housing 311 is an inclined surface 31121, and the inclined surface 31121 may be an inclined flat surface or an inclined curved surface. In FIG. 6, an example in which the inclined surface 31121 is an inclined flat surface is used for description. The second surface 413 of the antenna bracket 410 is disposed in a shape similar to the inclined surface 31121. For example, when the inclined surface 31121 is an inclined flat surface, the second surface 413 of the antenna bracket 410 is correspondingly disposed as an inclined flat surface; and when the inclined surface 31121 is an inclined curved surface, the second surface 413 of the antenna bracket 410 is correspondingly disposed as an inclined curved surface. This may facilitate signal radiation of the excitation source 420, thereby preventing a signal from being shielded by a desktop.

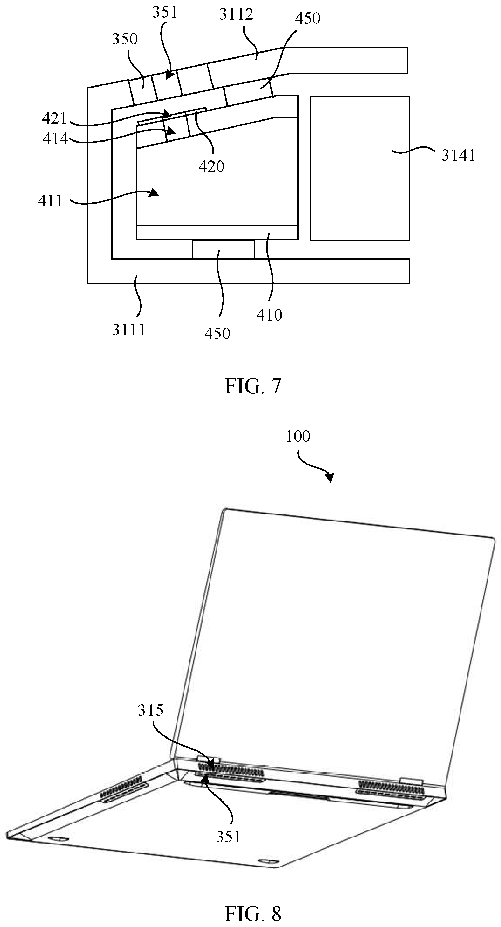

FIG. 7 is a schematic diagram of a structure of an antenna assembly 400 of a notebook computer 100 according to an embodiment of this application. Referring to FIG. 7 and with reference to FIG. 4, in some embodiments of this application, a second air vent 351 may be disposed on the non-metal member 350. A third air vent 421 and a fourth air vent 414 are respectively disposed on the excitation source 420 and the antenna bracket 410, and at least a part of the fourth air vent 414 and the third air vent 421 communicate with the vent channel 411. In this case, the antenna assembly 400 can assist the first air vent 315 in air intake or exhaust, and in addition, may improve appearance aesthetics of the notebook computer 100 (refer to FIG. 8 for an effect diagram). Certainly, when the antenna assembly 400 does not need to assist the first air vent 315 in air intake or exhaust, there is no need to dispose the second air vent 351, the third air vent 421, and the fourth air vent 414.

Referring to FIG. 4, that at least a part of the fourth air vent 414 and the third air vent 421 communicate with means that a fourth air vent 414 may further be disposed on the second surface 413 of the antenna bracket 410 on which the excitation source 420 is not disposed. In this case, the fourth air vent 414 communicates with the vent channel 411 but does not communicate with the third air vent 421. The second surface 413 of the antenna bracket 410 that does not need to be disposed with the fourth air vent 414 and the excitation source 420 may be cut off, for example, a cut-off part 415 that is recessed at two ends of the antenna bracket 410 relative to the middle part in FIG. 4.

Quantities and shapes of the first air vent 315, the second air vent 351, the third air vent 421, and the fourth air vent 414 are not limited in this application. For example, there may be one or more first air vents 315, second air vents 351, third air vents 421, and fourth air vents 414. The shapes of the first air vent 315, the second air vent 351, the third air vent 421, and the fourth air vent 414 may be square holes, circular holes, slotted holes, or the like.

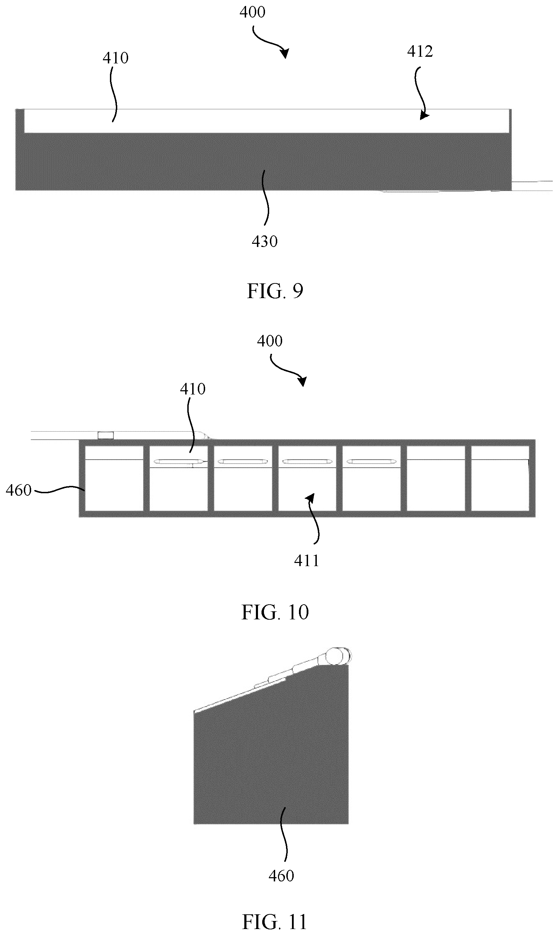

FIG. 9 is a bottom view corresponding to the antenna assembly 400 shown in FIG. 5. FIG. 10 is a back view corresponding to the antenna assembly 400 shown in FIG. 5. Referring to FIG. 9 and FIG. 10 and with reference to FIG. 5, in some embodiments of this application, a grounding region 430 may further be disposed on the first surface 412 of the antenna bracket 410, and the grounding region 430 on the first surface 412 of the antenna bracket 410 is connected to the grounding region 430 on the second surface 413 of the antenna bracket 410. For example, as shown in FIG. 10, an electrical connection part 460 may be disposed on a side that is of the antenna bracket 410 and that is away from a first air outlet, and the electrical connection part 460 connects the grounding region 430 on the first surface 412 of the antenna bracket 410 to the grounding region 430 on the second surface 413 of the antenna bracket 410. In this case, a grounding area of an antenna can be increased, thereby improving overall performance of the antenna. In addition, a flexible conductive member 450 may further be disposed on the grounding region 430 of the first surface 412 of the antenna bracket 410 to connect to the first metal housing 311 (refer to FIG. 7).

FIG. 11 is a side view corresponding to the antenna assembly 400 shown in FIG. 5. Referring to FIG. 5, FIG. 9, FIG. 10, and FIG. 11, in some embodiments of this application, the electrical connection part 460 is disposed on two end surfaces that are of the antenna and that are perpendicular to the vent channel 411 and on a column on a side that is of each vent channel 411 and that is away from the first air vent 315. The electrical connection part 460 connects the grounding region 430 on the first surface 412 of the antenna bracket 410 to the grounding region 430 on the second surface 413 of the antenna bracket 410 to form a resonant cavity antenna. The excitation source 420, the grounding region 430, and the electrical connection part 460 form an interconnected integral entity.

Compared with a conventional antenna, the resonant cavity antenna does not need a complex feed network and has a simple structure easy for processing, which helps improve antenna directivity, sharpen a beam width, and reduce a size of the radiation port disposed on the first metal housing 311.

Still referring to FIG. 4, in some embodiments of this application, an excitation conductor 470 is disposed on a side portion of the vent channel 411. One end of the excitation conductor 470 is connected to the excitation source 420, and the other end of the excitation conductor 470 extends toward the first surface 412 of the antenna bracket 410. For example, as shown in FIG. 4, the excitation conductor 470 may be formed on a sidewall of the vent channel 411 by using the FPC or the LDS, and the excitation conductor 470 is connected to the excitation source 420 by using the electrical connection part 460. In this way, a metal coupling amount on a sidewall of the C housing 3111 and on a surface that is of the C housing 3111 and that is disposed with the keyboard 320 may be increased, which can effectively improve or compensate for antenna efficiency and a bandwidth. This application imposes no limitation on a quantity of excitation conductors 470, which may be one or more. A plurality of excitation conductors 470 are separately disposed on the sidewall of each vent channel 411.

Still referring to FIG. 3, in some embodiments of this application, there are at least two antenna assemblies 400, and two antenna assemblies 400 are disposed along two adjacent side edges of the notebook computer 100. It may be understood that the two antenna assemblies 400 are disposed perpendicular to each other.

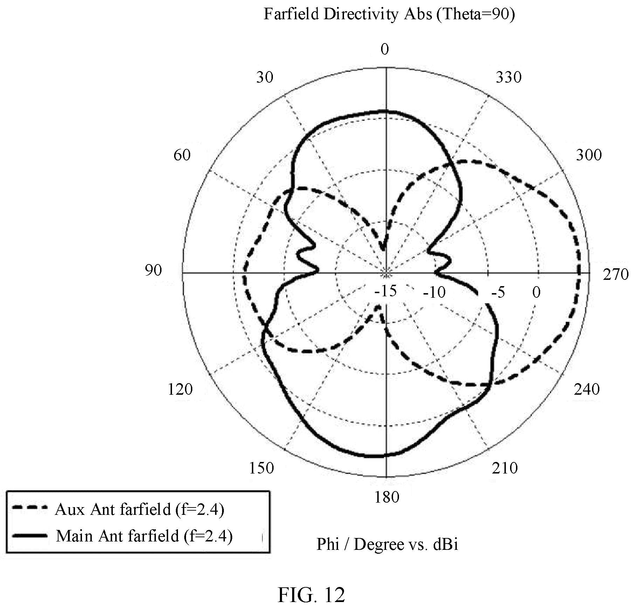

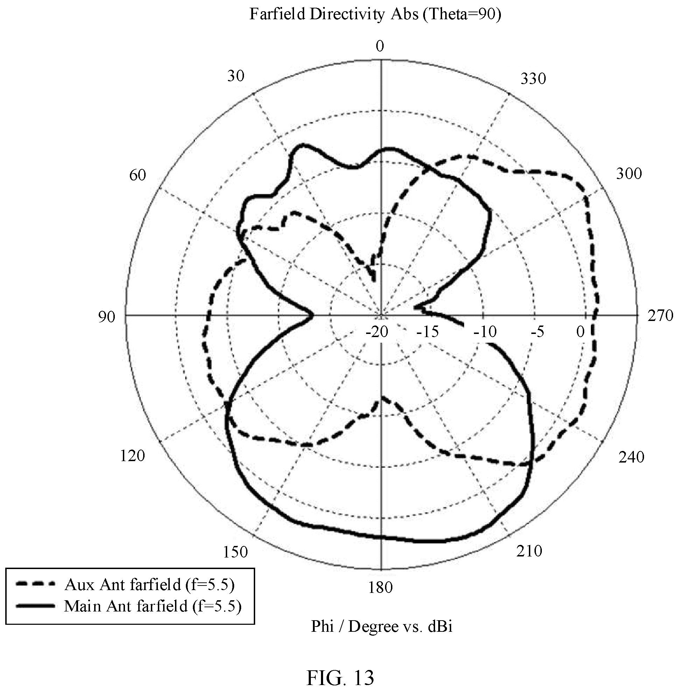

FIG. 12 is a direction effect diagram of two antenna assemblies 400 in a 2.4G frequency band according to an embodiment of this application. FIG. 13 is a direction effect diagram of two antenna assemblies 400 in a 5.5G frequency band according to an embodiment of this application. Referring to FIG. 12 and FIG. 13, when the two antenna assemblies 400 are disposed along two adjacent side edges of the notebook computer 100, directivity of the antenna can be improved, and direction complementarity can be implemented in the 2.4G/5.5G frequency bands. For antenna performance, refer to Table 1 and Table 2. Table 1 shows antenna efficiency and a directional coefficient, and Table 2 shows an OTA indicator. It can be learned from Table 1 and Table 2 that the two antennas perpendicular to each other are improved to some extent in terms of overall efficiency, a directional coefficient, isolation, and an OTA indicator compared with the conventional antenna.

**Table 1**

| | Conventional countersunk shaft - antenna solution | | | This solution | | |
|---|---|---|---|---|---|---|
| | Antenna 1 | Antenna 2 | Combined indicator | Antenna 1 | Antenna 2 | Combined indicator |
| Antenna efficiency - cover open 110° | 2.4G: -3.3 | 2.4G: -3.8 | **2.4G: -3.3** | 2.4G: -4.2 | 2.4G: -3.4 | **2.4G: -3.4** |
| | 5G: -5.6 | 5G: -5.3 | **5G: -5.3** | 5G: -4.5 | 5G: -3.5 | **5G: -3.5** |
| Antenna efficiency - cover closed 0° | 2.4G: -6.3 | 2.4G: -6.8 | **2.4G: -6.3** | 2.4G: -4.7 | 2.4G: -3.9 | **2.4G: -3.9** |
| | 5G: -7.1 | 5G: -6.8 | **5G: -6.8** | 5G: -5.0 | 5G: -4.0 | **5G: -4.0** |
| Directional coefficient (dBi) | 2.4G: 7.5 | 2.4G: 9.1 | | 2.4G: 5.4 | 2.4G: 4.8 | |
| | 5G: 9.1 | 5G: 10 | | 5G: 6.2 | 5G: 5.7 | |
| Antenna isolation | **2.4G: -17** | | | **2.4G: -30** | | |
| | **5G: -20** | | | **5G: -30** | | |

**Table 2**

| 2.4G antenna 1 | Wire conduction | | Antenna data | | Interference fluctuation | OTA indicator | | | |
|---|---|---|---|---|---|---|---|---|---|
| | TX | RX | Efficiency | Gain | RX | TX | PSD | EIRP | RX |
| 11b | 15.5 | -88.5 | -4.2 | 1.2 | 1 | 11.3 | 7.7 | 16.7 | -83.3 |
| 11g | 16 | -76 | -4.2 | 1.2 | 1 | 11.8 | 4.7 | 17.2 | -70.8 |

| 2.4G antenna 2 | Wire conduction | | Antenna data | | Interference fluctuation | OTA indicator | | | |
|---|---|---|---|---|---|---|---|---|---|
| | TX | RX | Efficiency | Gain | RX | TX | PSD | EIRP | RX |
| 11b | 15.5 | -88.5 | -3.4 | 1.2 | 1 | 12.1 | 7.7 | 16.7 | -84.1 |
| 11g | 16 | -76 | -3.4 | 1.2 | 1 | 12.6 | 4.7 | 17.2 | -71.6 |

| 5G antenna 1 | Wire conduction | | Antenna data | | Interference fluctuation | OTA indicator | | | |
|---|---|---|---|---|---|---|---|---|---|
| | TX | RX | Efficiency | Gain | RX | TX | PSD | EIRP | RX |
| 11a-B1/2/3 | 16 | -76.5 | -4.5 | 2 | 1 | 11.5 | 5.5 | 18 | -71 |
| 11a-B4 | 19 | -76.5 | -4.5 | 2 | 1 | 14.5 | 8.5 | 21 | -71 |

| 5G antenna 2 | Wire conduction | | Antenna data | | Interference fluctuation | OTA indicator | | | |
|---|---|---|---|---|---|---|---|---|---|
| | TX | RX | Efficiency | Gain | RX | TX | PSD | EIRP | RX |
| 11a-B1/2/3 | 16 | -76.5 | -3.5 | 2 | 1 | 12.5 | 5.5 | 18 | -72 |
| 11a-B4 | 19 | -76.5 | -3.5 | 2 | 1 | 15.5 | 8.5 | 21 | -72 |

In addition, orientation terms such as "inside" and "outside" mentioned in the embodiments of this application are merely directions in the accompanying drawings. Therefore, the used orientation terms are intended for better and clearer description and understanding of the embodiments of this application, and are not intended for indicating or implying that an indicated apparatus or element needs to have a specific orientation or constructed and operated in a specific orientation, and therefore shall not be construed as limitations on the embodiments of this application. In addition, in this application, unless otherwise stated, "a plurality of" in this application means two or more.

In the embodiments of this application, the term "and/or" is merely used to describe an association relationship between associated objects, and represents that three relationships may exist. For example, A and/or B may represent the following three cases: Only A exists, both A and B exist, and only B exists. In addition, the character "/" in this specification usually represents an "or" relationship between associated objects.

In the descriptions of the embodiments of this application, it should be noted that, unless otherwise explicitly specified and defined, the terms "mount", "communicate", and "connect" should be understood in a broadest sense, for example, may be a fixed connection, an indirect connection by using an intermediate medium, or communication inside two elements or an interactive relationship between two elements. A person of ordinary skill in the art may understand specific meanings of the foregoing terms in the embodiments of this application based on a specific situation.

The terms "first", "second", "third", "fourth", and the like (if they exist) in the specification, claims, and accompanying drawings of embodiments of this application are used to distinguish between similar objects, but are not necessarily used to describe a particular order or sequence.

Finally, it should be noted that, the foregoing embodiments are only used to illustrate the technical solutions of in the embodiments of this application, rather than constitute a limitation thereto. Although the embodiments of this application are described in detail with reference to the foregoing embodiments, it should be understood by a person of ordinary skill in the art that he/she may still modify the technical solutions described in the foregoing embodiments or equivalently replace some or all technical features therein; and these modifications or replacements do not make the essence of the corresponding technical solutions depart from the scope of the technical solutions of various embodiments of this utility model.

## Claims

1. A notebook computer, comprising a display and a host, wherein a side of the display is hinged to a side of the host, and the host comprises a first metal housing, a heat sink, and an antenna assembly;
the heat sink and the antenna assembly are disposed in the first metal housing;
the antenna assembly comprises an antenna bracket, an excitation source, a grounding region, a feed point, and a flexible conductive member, wherein a first air vent is disposed on a side edge of the first metal housing, at least one vent channel is formed on the antenna bracket, and the vent channel is disposed opposite to and close to the first air vent;
the antenna bracket has a first surface facing the side of the display and a second surface away from the side of the display, the excitation source and the feed point are disposed on the second surface of the antenna bracket, the feed point is connected to the excitation source, a grounding region is disposed on at least the second surface of the antenna bracket, the excitation source is connected to the grounding region, the flexible conductive member connects the grounding region to the first metal housing, and the flexible conductive member is located on a side that is of the excitation source and that is away from the first air vent; and
a radiation port or a non-metal member is disposed in a region that is of the first metal housing and that directly faces the excitation source.

2. The notebook computer according to claim 1, wherein the first metal housing comprises a C housing close to the side of the display and a D housing away from the side of the display, a junction between the D housing and the side edge of the first metal housing is an inclined surface, the non-metal member is disposed on the inclined surface, and the second surface of the antenna bracket is disposed in a shape similar to the inclined surface.

3. The notebook computer according to claim 2, wherein a second air vent is disposed on the non-metal member, a third air vent and a fourth air vent are respectively disposed on the excitation source and the antenna bracket, and at least a part of the fourth air vent and the third air vent communicate with the vent channel.

4. The notebook computer according to any one of claims 1-3, wherein a grounding region is disposed on the first surface of the antenna bracket, and the grounding region on the first surface of the antenna bracket is connected to the grounding region on the second surface of the antenna bracket; and
a flexible conductive member is disposed on the grounding region on the first surface of the antenna bracket to be connected to the first metal housing.

5. The notebook computer according to claim 4, wherein an electrical connection part is disposed on two end surfaces that are of the antenna bracket and that are perpendicular to the vent channel and on a column on a side that is of each vent channel and that is away from the first air vent, and the electrical connection part connects the grounding region on the first surface of the antenna bracket to the grounding region on the second surface of the antenna bracket to form a resonant cavity antenna.

6. The notebook computer according to claim 5, wherein an excitation conductor is disposed on a sidewall of the vent channel, one end of the excitation conductor is connected to the excitation source, and the other end of the excitation conductor extends toward the first surface of the antenna bracket.

7. The notebook computer according to any one of claims 1-6, wherein there are at least two antenna assemblies, and two antenna assemblies are disposed along two adjacent side edges of the notebook computer.

8. The notebook computer according to any one of claims 1-7, wherein an antenna formed by the excitation source, the grounding region, and feed point is an FPC antenna or an LDS antenna.

9. The notebook computer according to any one of claims 1-8, wherein the excitation source and the first metal housing are spaced apart.

10. The notebook computer according to any one of claims 1-9, wherein the first air vent is disposed on a side that is of the first metal housing and that is hinged to the display and/or is disposed on a side adjacent to the side that is of the first metal housing and that is hinged to the display.
